# EUROPÄISCHE PATENTSCHRIFT

(11) **EP 3 417 534 B1**
(45) Veröffentlichungstag und Bekanntmachung des Hinweises auf die Patenterteilung: **16.07.2025**
(21) Anmeldenummer: 16709438.2
(22) Anmeldetag: 11.03.2016
(51) Int. Cl.: H02M 7/483, H02M 1/32

(54) **MODULARER MULTILEVELSTROMRICHTER**
MODULAR MULTILEVEL CURRENT CONVERTER
CONVERTISSEUR MODULAIRE MULTINIVEAUX

(43) Veröffentlichungstag der Anmeldung: 26.12.2018
(73) Patentinhaber: Siemens Energy Global GmbH & Co. KG, 81739 München (DE)
(72) Erfinder: BÖHME, Daniel, 90480 Nürnberg (DE); KÜBEL, Thomas, 91056 Erlangen (DE); PIERSTORF, Steffen, 90443 Nürnberg (DE); SCHMITT, Daniel, 92353 Postbauer-Heng (DE); SCHREMMER, Frank, 90768 Fürth (DE); STOLTZE, Torsten, 91074 Herzogenaurach (DE); WAHLE, Marcus, 90766 Fürth (DE)
(86) Internationale Anmeldenummer: PCT/EP2016/055233
(87) Internationale Veröffentlichungsnummer: WO 2017/152989

(56) Entgegenhaltungen:
- EP-B1- 1 992 000
- EP-B1- 2 580 854
- WO-A1-2011/154047
- WO-A1-2015/133365
- WO-A1-2015/133365
- CN-A- 103 941 073
- CN-A- 103 941 073
- JP-A- 2015 130 743
- JP-A- 2015 130 743
- US-A1- 2016 056 710

## Beschreibung

Die Erfindung betrifft einen modularen Multilevelstromrichter und ein Verfahren zum Überwachen eines solchen Stromrichters.

Stromrichter (power converter) sind leistungselektronische Schaltungen zum Umwandeln von elektrischer Energie. Mit Stromrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Stromrichter können eine Vielzahl von gleichartigen Modulen aufweisen, welche elektrisch in Reihe geschaltet sind. Diese Module werden auch als Submodule bezeichnet. Diese Module weisen jeweils mindestens zwei elektronische Schaltelemente und einen elektrischen Energiespeicher auf. Ein solcher Stromrichter ist beispielsweise aus der Offenlegungsschrift JP 2015 130743 A bekannt. Solche Stromrichter werden als modulare Multilevelstromrichter bezeichnet und gehören zu den VSC-Stromrichtern (VSC = voltage sourced converter). Durch die elektrische Reihenschaltung der Module lassen sich hohe Ausgangsspannungen erreichen. Die Stromrichter sind einfach an unterschiedliche Spannungen anpassbar (skalierbar) und eine gewünschte Ausgangsspannung kann relativ genau erzeugt werden. Diese Stromrichter werden oftmals im Hochspannungsbereich eingesetzt, beispielsweise als Stromrichter bei Hochspannungs-Gleichstrom-Übertragungsanlagen oder als Blindleistungskompensatoren bei flexiblen Drehstromübertragungssystemen.

Um den Stromrichter auch bei einem Auftreten eines Defekts an einem Modul (oder an mehreren Modulen) weiterbetreiben zu können, weisen die Module jeweils einen Schalter auf, der in seinem geschlossenen Schaltzustand das Modul elektrisch überbrückt (kurzschließt). Module mit solchen Schaltern sind aus der Offenlegungsschrift WO 2015/133365 A1 bekannt. Anstelle des überbrückten Moduls kann dann ein Reserve-Modul zum Betrieb des Stromrichters verwendet; daher weist der Stromrichter oft mehrere Reserve-Module auf.

Aus der Schrift CN 103 941 073 A sind ebenfalls Module mit derartigen Schaltern bekannt.

Aus der Offenlegungsschrift US 2016/056710 A1 ist ein Stromrichter bekannt, dessen Module mit einem mechanischen Schalter überbrückt werden können. Dabei weist der mechanische Schalter ein bewegliches Schaltteil auf. Die Module enthalten eine Überwachungseinrichtung, die mittels eines Lichtwellenleiters die Lage des beweglichen Schaltteils und dadurch die Schaltstellung des Schalters überwacht.

In der internationalen Patentanmeldung WO 2011/154047 A1 ist die Möglichkeit offenbart, zum Überwachen des Schaltzustands eines mechanischen Schalters einen Messsensor einzusetzen, der einen über die Kontakte des Schalters fließenden Schaltstrom erfasst.

Der Schalter zum elektrischen Überbrücken des Moduls wird auch als Überbrückungsschalter oder als Bypassschalter bezeichnet. Das defekte Modul wird solange mittels des Schalters elektrisch überbrückt (kurzgeschlossen), bis es bei einer Wartung des Stromrichters durch ein funktionsfähiges Modul ersetzt wird. Je nach zeitlichem Abstand zwischen den einzelnen Wartungen kann es daher notwendig sein, dass ein Modul eine lange Zeit mittels des Schalters elektrisch überbrückt wird.

Es kann der Fall auftreten, dass auch der Schalter zum Überbrücken des fehlerhaften Moduls einen Fehler aufweist, **d.h.** dass der Schalter nicht ordnungsgemäß funktioniert. Ein solcher Fehler des Schalters kann beispielsweise darin bestehen, dass sich der Schaltkontakt während des Schließvorgangs verkantet oder dass es überhaupt nicht zum Schließvorgang des Schalters kommt, obwohl eine Schließ-Anweisung an den Schalter gesendet worden ist. Letzteres kann beispielsweise bei einem Elektronikausfall passieren. Infolgedessen wird kein Strom oder nur ein geringer Strom an dem defekten Modul vorbeigeführt, so dass dann die Schutzfunktion des Schalters nicht oder nur zum Teil gegeben ist.

Wenn die elektrische Überbrückung des Moduls nicht ordnungsgemäß funktioniert, dann kann der Strom weiterhin durch das defekte Modul fließen, wodurch ein Totalausfall des Stromrichters (beispielsweise durch einen Brand) auftreten kann. Es ist auch möglich, dass das defekte Modul den Stromfluss unterbricht und es deshalb zum Ausfall des Stromrichters kommt.

Der Erfindung liegt die Aufgabe zugrunde, einen Multilevelstromrichter und ein Verfahren anzugeben, mit denen ein Ausfall des Multilevelstromrichters vermieden werden kann.

Diese Aufgabe wird erfindungsgemäß gelöst durch einen Multilevelstromrichter und durch ein Verfahren nach den unabhängigen Patentansprüchen. Vorteilhafte Ausführungsformen des Multilevelstromrichters und des Verfahrens sind in den jeweiligen abhängigen Patentansprüchen angegeben.

Offenbart wird ein modularer Multilevelstromrichter, mit mindestens einer Anordnung, die ein Modul des modularen Multilevelstromrichters umfasst, wobei die Anordnung einen Schalter, der in seinem geschlossenen Schaltzustand das Modul elektrisch überbrückt und einen (elektrischen) Messsensor zur Messung einer physikalischen Größe, die an dem Schalter auftritt und die verschiedene Werte annimmt in Abhängigkeit davon, ob der Schalter in seinem geöffneten Schaltzustand (geöffneter Schalter) oder in seinem geschlossenen Schaltzustand (geschlossener Schalter) ist, aufweist. Dabei ist vorteilhaft, dass die Anordnung den elektrischen Messsensor aufweist. Mit diesem Messsensor kann die physikalische Größe gemessen werden. Die physikalische Größe erlaubt einen Rückschluss darauf, ob der Schalter (zum Zeitpunkt der Messung) in seinem geöffneten Schaltzustand oder in seinem geschlossenen Schaltzustand ist, dass heißt, ob der Schalter geöffnet oder geschlossen ist. Mit der Anordnung kann also die ordnungsgemäße Funktion des Schalters überwacht werden.

Die Anordnung ist so ausgestaltet, dass die physikalische Größe eine elektrische Spannung ist. Diese physikalische Größe (Spannung) erlaubt einen Rückschluss darauf, ob der Schalter geöffnet oder geschlossen ist.

Die Anordnung ist so ausgestaltet, dass der Messsensor ein Spannungs-Messsensor ist, der parallel zu dem Schalter geschaltet ist. Der Spannungs-Messsensor ist in einer Parallelschaltung mit dem Schalter geschaltet. Mittels des Spannungs-Messsensors kann ermittelt werden, ob der Schalter in seinem geöffneten Schaltzustand oder in seinem geschlossenen Schaltzustand ist.

Die Anordnung kann so ausgestaltet sein, dass der Schalter ein mechanischer Schalter ist. Ein mechanischer Schalter ist hier von Vorteil, weil über einen mechanischen Schalter große Ströme auch über lange Zeiten mit geringen Verlusten fließen können.

Die Anordnung kann so ausgestaltet sein, dass das Modul mindestens zwei elektronische Schaltelemente und einen elektrischen Energiespeicher aufweist.

Dabei ist die Anordnung so ausgestaltet, dass die zwei elektronischen Schaltelemente des Moduls in einer Halbbrückenschaltung angeordnet sind (ein derartiges Modul wird auch als Halbbrücken-Modul oder als Halbbrücken-Submodul bezeichnet) oder die Anordnung ist so ausgestaltet, dass das Modul die zwei elektronischen Schaltelemente und zwei weitere elektronische Schaltelemente aufweist, wobei die zwei elektronischen Schaltelemente und die zwei weiteren elektronischen Schaltelemente in einer Vollbrückenschaltung angeordnet sind (ein derartiges Modul wird auch als Vollbrücken-Modul oder als Vollbrücken-Submodul bezeichnet).

Der modulare Multilevelstromrichter weist vorzugsweise eine Mehrzahl der vorstehend beschriebenen Anordnungen auf, beispielsweise mindestens 24 solche Anordnungen.

Offenbart wird auch eine Hochspannungs-Gleichstrom-Übertragungsanlage mit einem erfindungsgemäßen modularen Multilevelstromrichter.

Offenbart wird weiterhin ein Verfahren zum Überwachen eines modularen Multilevelstromrichters, der mindestens einen Phasenmodulzweig mit einer Mehrzahl von Modulen aufweist, die mit jeweils einem elektrischen Schalter versehen sind, der in seinem geschlossenen Schaltzustand das jeweilige Modul elektrisch überbrückt, wobei bei dem Verfahren
- mittels eines (elektrischen) Messsensors eine physikalische Größe unter Bildung eines Messwerts der physikalischen Größe gemessen wird, wobei die physikalische Größe an dem Schalter auftritt und verschiedene Werte annimmt in Abhängigkeit davon, ob der Schalter in seinem geöffneten Schaltzustand oder in seinem geschlossenen Schaltzustand ist, und
- anhand des Messwerts ermittelt wird, ob der Schalter (zum Zeitpunkt der Bildung des Messwerts) in seinem geöffneten Schaltzustand oder in seinem geschlossenen Schaltzustand ist. Bei diesem Verfahren wird anhand des Messwerts der physikalischen Größe ermittelt, ob der Schalter (zum Zeitpunkt der Messung des Messwerts) in seinem geöffneten Schaltzustand oder in seinem geschlossenen Schaltzustand ist. Der Messwert gibt also eine Rückmeldung darüber, ob der Schalter in seinem geöffneten Schaltzustand (geöffneter Schalter) oder in seinem geschlossenen Schaltzustand (geschlossener Schalter) ist.

Das Verfahren läuft so ab, dass
- als physikalische Größe die über dem Schalter auftretende Spannung unter Bildung eines Schalter-Spannungs-Messwerts gemessen wird, und der geschlossene Schaltzustand erkannt wird, wenn der Schalter-Spannungs-Messwert einen (vorbestimmten) Minimum-Schalter-Spannungswert unterschreitet (und der geöffnete Schaltzustand erkannt wird, wenn der Schalter-Spannungs-Messwert den Minimum-Schalter-Spannungswert überschreitet). Als physikalische Größe wird also die über dem Schalter auftretende Spannung (d.h. die über dem Schalter anliegende Spannung) gemessen und ausgewertet.

Das Verfahren kann auch so ablaufen, dass bei ermitteltem geschlossenen Schaltzustand des Schalters die physikalische Größe wiederholt in zeitlichen Abständen unter Bildung jeweils eines Messwertes gemessen wird, und für die Messwerte jeweils ermittelt wird, ob der Schalter (zum Zeitpunkt der Bildung des Messwerts) in seinem geöffneten Schaltzustand oder in seinem geschlossenen Schaltzustand ist. Mit diesem Verfahren kann vorteilhafterweise ermittelt werden, ob der Schalter auch während längerer Zeiträume den geschlossenen Schaltzustand beibehält.

Das Verfahren läuft so ab, dass bei ermitteltem geschlossenem Schaltzustand des Schalters wiederholt in zeitlichen Abständen Schalter-Spannungs-Messwerte ermittelt werden, und diese Schalter-Spannungs-Messwerte daraufhin ausgewertet werden, ob der ohmsche Übergangswiderstand des Schalters zunimmt. Mit diesem Verfahren kann vorteilhafterweise ermittelt werden, ob der ohmsche Übergangswiderstand des Schalters zunimmt. Ein zunehmender ohmscher Übergangswiderstand des Schalters ist ein Anzeichen dafür, dass der elektrische Kontakt des geschlossenen Schalters zunehmend schlechter wird. Dadurch funktioniert die Überbrückung des Moduls zunehmend schlechter und es entstehen an dem ohmschen Übergangswiderstand ungewünschte elektrische Verluste. Ein zunehmender ohmscher Übergangswiderstand des Schalters ist also ein Hinweis darauf, dass der Schalter seine Überbrückungsfunktion zunehmend schlechter ausführt und daher repariert oder ausgetauscht werden sollte.

Das Verfahren kann auch so ablaufen, dass
- erkannt wird, dass der ohmsche Übergangswiderstand des Schalters zunimmt, wenn die Schalter-Spannungs-Messwerte größer werden.

Das Verfahren ist so ausgestaltet, dass das Modul mindestens zwei elektronische Schaltelemente und einen elektrischen Energiespeicher aufweist.

Das Verfahren ist so ausgestaltet, dass die zwei elektronischen Schaltelemente des Moduls in einer Halbbrückenschaltung angeordnet sind (Halbbrücken-Modul) oder dass das Modul die zwei elektronischen Schaltelemente und zwei weitere elektronische Schaltelemente aufweist, wobei die zwei elektronischen Schaltelemente und die zwei weiteren elektronischen Schaltelemente in einer Vollbrückenschaltung angeordnet sind (Vollbrücken-Modul).

Das Verfahren kann so ausgestaltet sein, dass ein Schalter-Geöffnet-Signal ausgegeben wird, wenn bei einem defekten Modul der Schalter in seinem geöffneten Schaltzustand ist. Ein derartiges Schalter-Geöffnet-Signal kann beispielsweise ein Warnsignal sein oder ein derartiges Schalter-Geöffnet-Signal kann als eine zusätzliche Eingangsgröße zu einer Steuerungseinheit des Stromrichters geleitet werden. Die Steuerungseinheit des Stromrichters reagiert dann darauf, dass der Schalter in seinem geöffneten Schaltzustand ist, obwohl er (wegen des defekten Moduls) in seinem geschlossenen Schaltzustand sein sollte. Die Steuerungseinheit reduziert daraufhin den Ausgangsstrom des Stromrichters. Dadurch werden Überhitzungsschäden an dem defekten Modul, Brände etc. vermieden.

Die Anordnung und das Verfahren weisen gleichartige Vorteile auf; diese sind oben zum Teil nur bei der Anordnung und zum Teil nur bei dem Verfahren genannt.

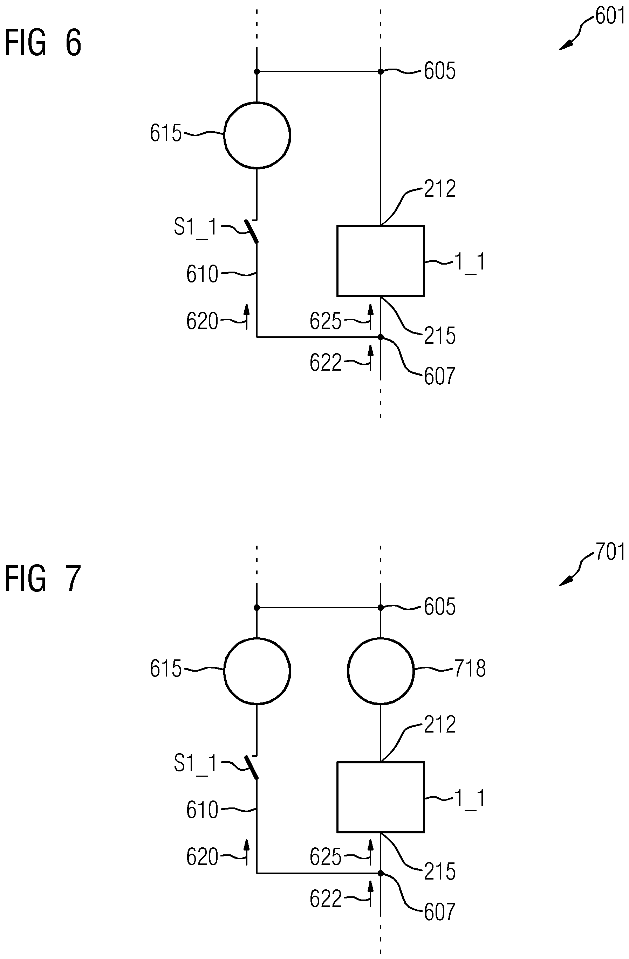

In der folgenden Beschreibung wird der Ausdruck "Ausführungsbeispiel" auch für Gegenstände oder Verfahren benutzt, die nicht im Schutzumfang der Ansprüche liegen. Die in den Figuren 6, 7, 8, 9 und 11 dargestellten Beispiele liegen nicht im Schutzumfang der Patentansprüche; sie dienen dem Verständnis der Erfindung.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines Stromrichters, der eine Vielzahl von Modulen aufweist, in
- Figur 2: ein Ausführungsbeispiel eines Moduls, in
- Figur 3: ein weiteres Ausführungsbeispiel eines Moduls, in
- Figur 4: ein Ausführungsbeispiel einer Hochspannungs-Gleichstrom-Übertragungsanlage, in
- Figur 5: ein Ausführungsbeispiel eines Stromrichters als Blindleistungskompensator, in
- Figur 6: ein Ausführungsbeispiel einer Anordnung mit einem Strom-Messsensor, in
- Figur 7: ein Ausführungsbeispiel einer Anordnung mit zwei Strom-Messsensoren, in
- Figur 8: ein Ausführungsbeispiel einer Anordnung mit einem Magnetfeld-Messsensor, in
- Figur 9: ein Ausführungsbeispiel einer Anordnung mit zwei Magnetfeld-Messsensoren, in
- Figur 10: ein Ausführungsbeispiel einer Anordnung mit einem Spannungs-Messsensor, in
- Figur 11: ein beispielhafter Verfahrensablauf und in
- Figur 12: ein weiterer beispielhafter Verfahrensablauf
dargestellt.

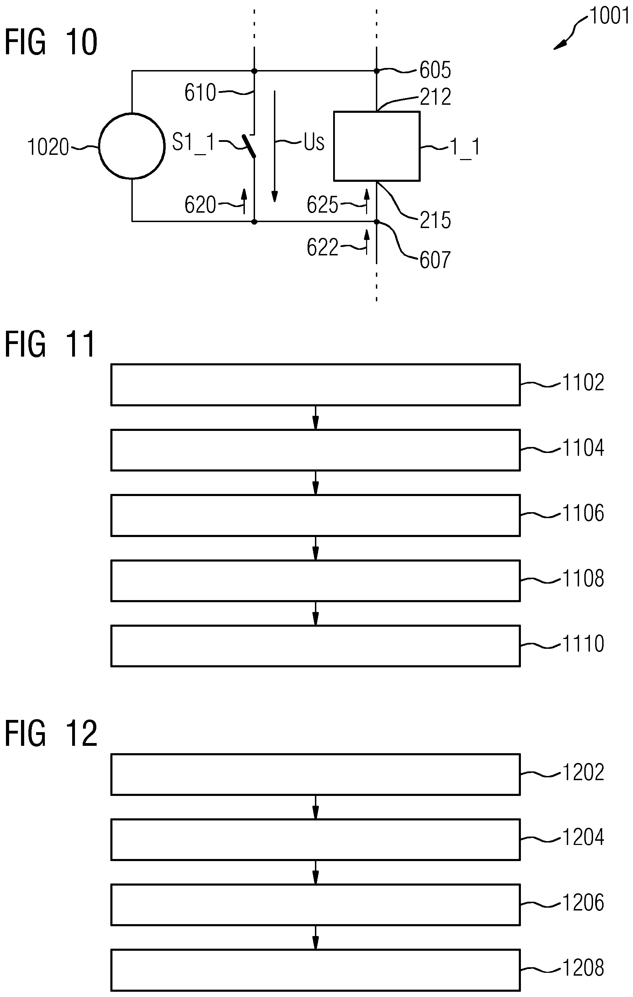

Fig. 10 gibt den Gegenstand der unabhängigen Ansprüche wieder.

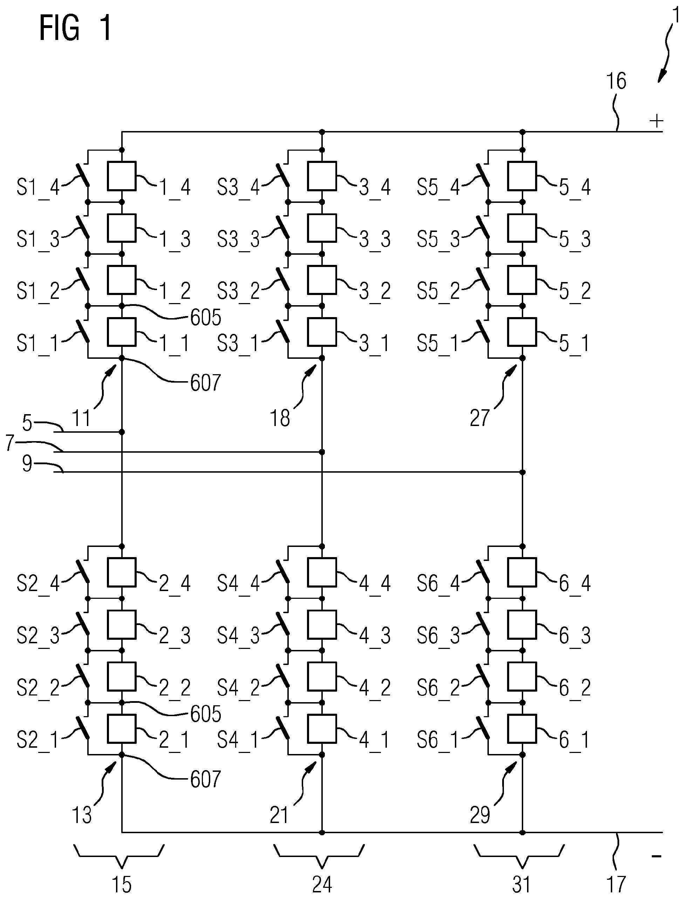

In Figur 1 ist ein Stromrichter 1 in Form eines modularen Multilevelstromrichters 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Modulen (1_1, 1_2, 1_3, 1_4; 2_1 ... 2_4; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig 4 Module (Stromrichter-Module) auf. Die Anzahl der (mittels ihrer galvanischen Stromanschlüsse) elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein.

Jedem Modul ist ein Schalter (Überbrückungsschalter, Bypassschalter) zugeordnet, der das Modul (bei einem Defekt des Moduls) überbrücken (kurzschließen) kann. Beispielsweise ist dem ersten Modul 1_1 ein erster Schalter S1_1 zugeordnet. Der erste Schalter S1_1 wird bei Auftreten eines Defekts an dem ersten Modul 1_1 von einer modulinternen Schalter-Ansteuereinrichtung angesteuert, daraufhin schließt der erste Schalter; das heißt, er geht von dem geöffneten Schaltzustand in den geschlossenen Schaltzustand über.

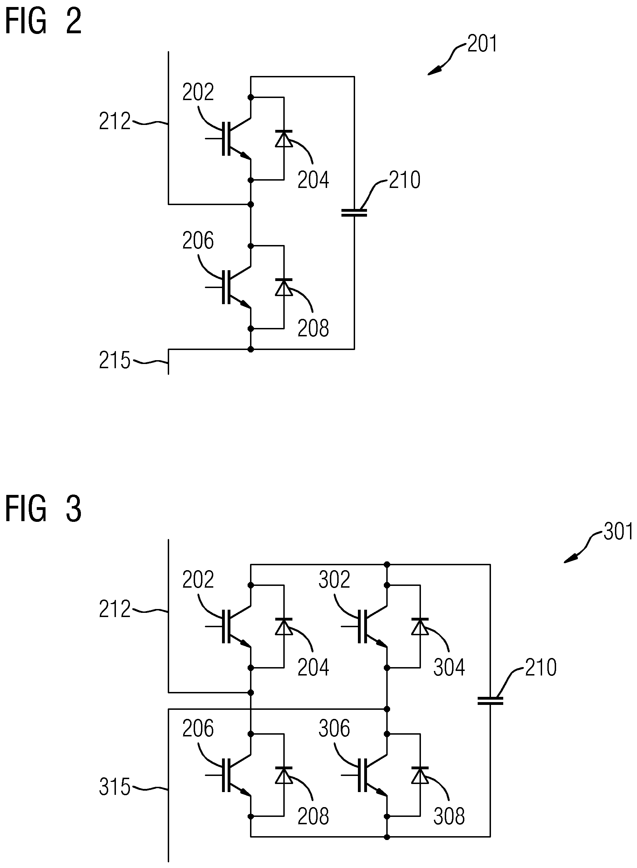

In Figur 2 ist beispielhaft der prinzipielle Aufbau eines Moduls 201 dargestellt. Dabei kann es sich beispielsweise um das Modul 1_1 des ersten Phasenmodulzweigs 11 (oder auch um eines der anderen in Figur 1 dargestellten Module) handeln. Das Modul ist als ein Halbbrücken-Modul 201 ausgestaltet. Das Modul 201 weist ein erstes ein- und abschaltbares Halbleiterventil 202 mit einer ersten antiparallel geschalteten Diode 204 auf. Weiterhin weist das Modul 201 ein zweites ein- und abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202 und 206 ist ein erster galvanischer Modulanschluss 212 angeordnet. An dem Anschluss des zweiten Halbleiterventils 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine modulinterne elektronische Ansteuerschaltung 220 kann erreicht werden, dass zwischen dem ersten galvanischen Modulanschluss 212 und dem zweiten galvanischen Modulanschluss 215 entweder die Spannung des Energiespeichers 210 ausgegeben wird oder keine Spannung ausgegeben wird (das heißt eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 3 ist ein weiteres Ausführungsbeispiel eines Moduls 301 dargestellt. Bei diesem Modul 301 kann es sich beispielsweise um das Modul 1_2 (oder auch um eines der anderen in Figur 1 dargestellten Module) handeln. Neben dem bereits aus Figur 2 bekannten ersten Halbleiterventil 202, zweiten Halbleiterventil 206, erster Diode 204, zweiter Diode 208 und Energiespeicher 210 weist das in Figur 3 dargestellte Modul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Modulanschluss 315 nicht mit dem zweiten Halbleiterventil 206 elektrisch verbunden, sondern mit einem Mittelpunkt einer elektrischen Reihenschaltung aus dem dritten Halbleiterventil 302 und dem vierten Halbleiterventil 306.

Das Modul 301 der Figur 3 ist ein sogenanntes Vollbrücken-Modul 301. Dieses Vollbrücken-Modul 301 zeichnet sich dadurch aus, dass bei entsprechender Ansteuerung der vier Halbleiterventile zwischen dem ersten galvanischen Modulanschluss 212 und dem zweiten galvanischen Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 1 kann entweder nur Halbbrücken-Module 201, nur Vollbrücken-Module 301 oder auch Halbbrücken-Module 201 und Vollbrücken-Module 301 aufweisen. Anstelle des beschriebenen Halbbrücken-Moduls oder des beschriebenen Vollbrücken-Moduls kann es sich bei dem Modul auch um ein anderes Mehrlevel-Modul handeln, beispielsweise um ein Drei-Level-Spannungswechselrichter-Modul oder um ein Fünf-Level-Spannungswechselrichter-Modul.

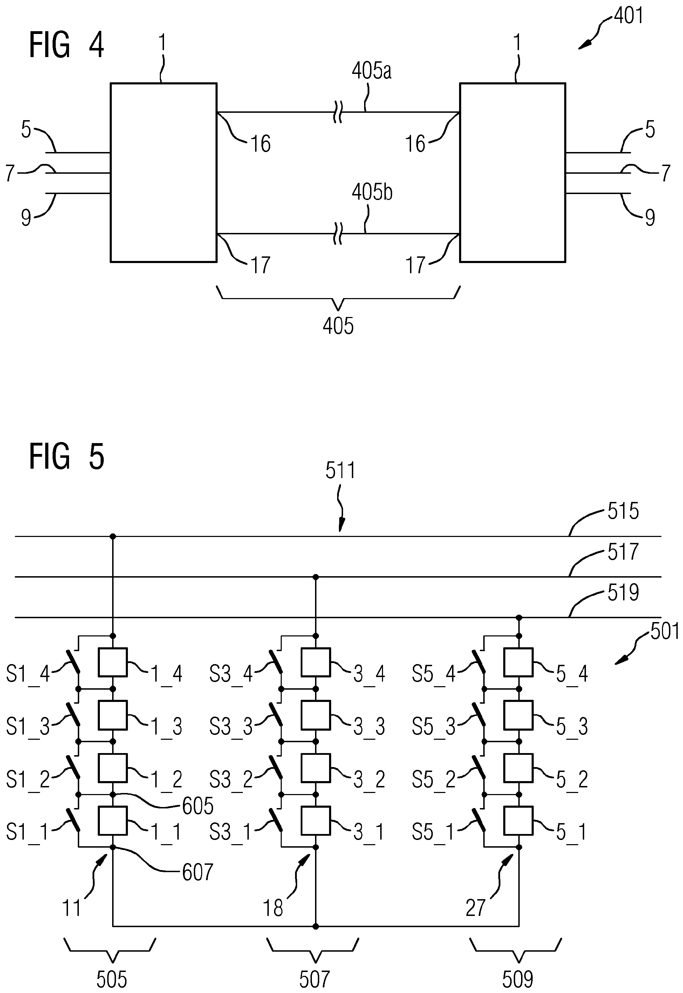

In Figur 4 ist schematisch ein Ausführungsbeispiel einer Hochspannungs-Gleichstrom-Übertragungsanlage 401 dargestellt. Diese Hochspannungs-Gleichstrom-Übertragungsanlage 401 weist zwei Stromrichter 1 auf, wie sie in Figur 1 dargestellt sind. Diese beiden Stromrichter 1 sind gleichspannungsseitig über eine Hochspannungs-Gleichstrom-Verbindung 405 elektrisch miteinander verbunden. Dabei sind die beiden positiven Gleichspannungsanschlüsse 16 der Stromrichter 1 mittels einer ersten Hochspannungs-Gleichstrom-Leitung 405a elektrisch miteinander verbunden; die beiden negativen Gleichspannungsanschlüsse 17 der beiden Stromrichter 1 sind mittels einer zweiten Hochspannungs-Gleichstrom-Leitung 405b elektrisch miteinander verbunden. Mittels einer derartigen Hochspannungs-Gleichstrom-Übertragungsanlage 401 kann elektrische Energie über weite Entfernungen übertragen werden; die Hochspannungs-Gleichstrom-Verbindung 405 weist dann eine entsprechende Länge auf.

In Figur 5 ist ein Ausführungsbeispiel eines Stromrichters 501 dargestellt, welcher als ein Blindleistungskompensator 501 dient. Dieser Stromrichter 501 weist lediglich die drei Phasenmodulzweige 11, 18 und 27 auf, welche drei Phasenmodule 505, 507 und 509 des Stromrichters bilden. Die Anzahl der Phasenmodule 505, 507 und 509 entspricht der Anzahl der Phasen eines Wechselspannungsnetzes 511, an das der Stromrichter 501 angeschlossen ist.

Die drei Phasenmodulzweige 11, 18 und 27 sind sternförmig miteinander verbunden. Das dem Sternpunkt entgegengesetzte Ende der drei Phasenmodulzweige ist mit jeweils einer Phasenleitung 515, 517 und 519 des dreiphasigen Wechselspannungsnetzes 511 elektrisch verbunden. (Die drei Phasenmodule 505, 507 und 509 können in einem anderen Ausführungsbeispiel anstelle in Sternschaltung auch in Dreieckschaltung geschaltet sein.) Der Stromrichter 501 kann das Wechselspannungsnetz 511 mit Blindleistung versorgen oder Blindleistung aus dem Wechselspannungsnetz 511 entnehmen.

In Figur 6 ist ein Ausführungsbeispiel einer Anordnung 601 mit dem Modul 1_1 und dem Schalter S1_1 des Stromrichters 1 dargestellt. Das Modul 1_1 und der Schalter S1_1 sind ein Teil des Stromrichters 1 der Figur 1. Dabei ist der erste Modulanschluss 212 elektrisch mit einem ersten Knoten 605 verbunden; der zweite Modulanschluss 215 ist elektrisch mit einem zweiten Knoten 607 verbunden. Ein den Schalter S1_1 aufweisender Überbrückungszeig 610 verbindet elektrisch den ersten Knoten 605 mit dem zweiten Knoten 607. Mit anderen Worten überbrückt der Überbrückungszweig 610 das Modul 1_1. Bei dem Schalter S1_1 handelt es sich um einen mechanischen Schalter, d. h. um einen Schalter, welcher mechanische Schaltkontakte aufweist.

In dem Überbrückungszweig 610 ist elektrisch in Reihe zu dem Schalter S1_1 ein elektrischer Messsensor 615 geschaltet. Der elektrische Messsensor 615 ist im Ausführungsbeispiel der Figur 6 ein erster Strom-Messsensor 615. Mittels dieses ersten Strom-Messsensors 615 wird der in dem Überbrückungszweig 610 fließende elektrische Strom 620 unter Bildung eines Strommesswertes M620 gemessen. Dieser Strommesswert wird im Folgenden als Schalter-Strom-Messwert M620 bezeichnet. Der elektrische Strom 620 in dem Überbrückungszweig 610 wird im Folgenden auch als Schalter-Strom 620 bezeichnet.

Durch die Anordnung 601 fließt ein Strom 622, der dem gesamten durch den Phasenmodulzweig 11 fließenden Strom entspricht, vgl. Figur 1. Dieser Strom 622 wird auch als Phasenmodulzweig-Strom 622 bezeichnet. Wenn der Phasenmodulzweigstrom 622 gemessen wird (mit einem nicht dargestellten Messsensor), dann weist der Phasenmodulzweigstrom 622 den Phasenmodulzweig-Strom-Messwert M622 auf. Der PhasenmodulzweigStrom 622 teilt sich an dem zweiten Knoten 607 auf in den Schalter-Strom 620 und in einen Modul-Strom 625. Der Modul-Strom 625 ist der durch das Modul 1_1 fließende Strom.

Wenn sich der Schalter S1_1 (wie in Figur 6 dargestellt) in seinem geöffneten Schaltzustand befindet, dann fließt über den Schalter S1_1 kein Strom und der erste Strom-Messsensor 615 misst als Schalter-Strom-Messwert den Wert Null: M620 = 0 A. Wenn sich der Schalter S1_1 in seinem geschlossenen Schaltzustand befindet, dann fließt nahezu der gesamte in dem Phasenmodulzweig 11 fließende Strom 622 über den Schalter S1_1. Der Schalter S1_1 hat nämlich in seinem geschlossenen Schaltzustand einen geringeren ohmschen Widerstand als das Modul 1_1. Daher misst bei geschlossenem Schaltzustand des Schalters S1_1 der erste Strom-Messsensor 615 einen Schalter-Strommesswert, der im Wesentlichen dem Phasenmodulzweig-Strom 622 entspricht: M620 = M622.

In Figur 7 ist eine weitere Anordnung 701 dargestellt. Diese weitere Anordnung 701 unterscheidet sich von der Anordnung 601 der Figur 6 dadurch, dass diese Anordnung 701 einen weiteren Strom-Messsensor 718 (zweiter Strom-Messsensor 718) aufweist. Dieser zweite Strom-Messsensor 718 ist zwischen dem ersten Modulanschluss 212 und dem ersten Knoten 605 angeordnet. Der zweite Strom-Messsensor 718 misst den durch das Modul 1_1 fließenden Modul-Strom 625 unter Bildung eines Modul-Strom-Messwerts M625. Als Strom-Messsensoren 615, 718 können bei den Anordnungen der Figuren 6 und 7 beispielsweise sogenannte Rogowskispulen verwendet werden, mit denen der Strom mittels eines Induktionsverfahren gemessen wird.

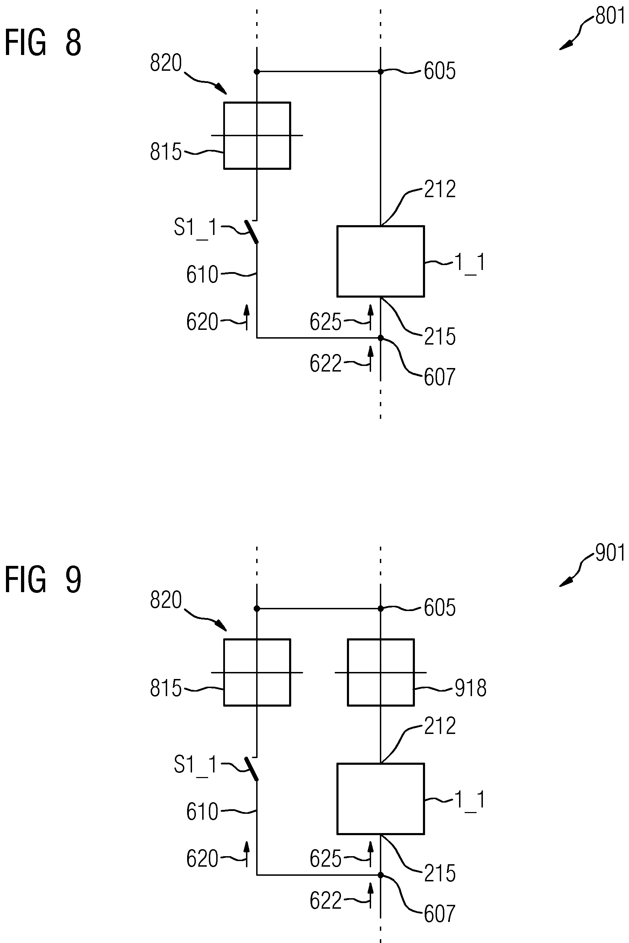

In Figur 8 ist ein Ausführungsbeispiel einer Anordnung 801 dargestellt, welche einen ersten Magnetfeld-Messsensor 815 aufweist. Diese Anordnung unterscheidet sich von der in Figur 6 dargestellten Anordnung 601 lediglich dadurch, dass der erste Magnetfeld-Messsensor 815 anstelle des ersten Strom-Messsensors 615 angeordnet ist. Der erste Magnetfeld-Messsensor 815 misst das von dem über den Schalter S1_1 fließenden Schalter-Strom 620 erzeugte Magnetfeld 820 unter Bildung eines Magnetfeld-Messwerts. Aus diesem Magnetfeld-Messwert kann der durch den Überbrückungszweig 610 fließenden Schalter-Strom 620 ermittelt werden. Bei der Messung mittels des ersten Magnetfeld-Messsensors 815 handelt es sich also um ein alternatives Verfahren zur Messung des Schalter-Stroms 620.

Der erste Magnetfeld-Messsensor misst also die physikalische Größe Magnetfeld. Wenn der Schalter S1_1 geschlossen ist, dann fließt durch den Überbrückungszweig 610 der Schalter-Strom 620. Folglich misst der erste Magnetfeld-Messsensor 815 das aufgrund dieses Schalter-Stroms 620 entstehende Magnetfeld. Wenn jedoch der Schalter S1_1 geöffnet ist, dann fließt durch den Überbrückungszweig 610 kein Strom und der erste Magnetfeld-Messsensor 815 misst einen Magnetfeld-Messwert von Null. Das stets existierende Erdmagnetfeld oder das sehr geringe Magnetfeld von entfernten elektrischen Strömen kann hierbei vernachlässigt werden.

In Figur 9 ist ein Ausführungsbeispiel einer Anordnung 901 dargestellt. Diese Anordnung 901 unterscheidet sich von der in Figur 7 dargestellten Anordnung 701 dadurch, dass anstelle des ersten Strom-Messsensors 615 und des zweiten Strom-Messsensors 718 der erste Magnetfeld-Messsensor 815 und ein weiterer Magnetfeld-Messsensor 918 vorhanden ist (zweiter Magnetfeld-Messsensor 918). Der zweite Magnetfeld-Messsensor 918 misst das Magnetfeld, das von dem über das Modul 1_1 fließenden Modul-Strom 625 erzeugt wird unter Bildung eines Magnetfeld-Messwerts. Aus diesem Magnetfeld-Messwert kann der durch das Modul 1_1 fließende Modul-Strom 625 ermittelt werden. Derartige Magnetfeld-Messsensoren 815, 918 werden auch als Hall-Sensoren bezeichnet. Mittels Hall-Sensoren wird der Strom indirekt unter Nutzung des Magnetfelds gemessen (Hall-Effekt).

In Figur 10 ist ein Ausführungsbeispiel einer Anordnung 1001 mit einem Spannungs-Messsensor 1020 dargestellt. In Übereinstimmung mit den Anordnungen der Figuren 6 bis 9 weist diese Anordnung das Modul 1_1 und den Überbrückungszweig 610 mit dem Schalter S1_1 auf. Im Unterschied zu den Anordnungen der Figuren 6 bis 9 ist jedoch in dem Überbrückungszweig 610 kein elektrischer Messsensor angeordnet (messsensorfreier Überbrückungszweig 610), sondern ein elektrischer Messsensor 1020 in Form des Spannungs-Messsensors 1020 ist parallel zu dem Schalter S1_1 geschaltet (und damit auch parallel zu dem Modul 1_1). Mittels dieses Spannungs-Messsensors 1020 wird die über dem Schalter S1_1 auftretende Spannung Us (Schalter-Spannung Us) unter Bildung eines Spannungs-Messwerts gemessen. Dieser Spannungs-Messwert wird im Folgenden als Schalter-Spannungs-Messwert bezeichnet.

Mittels des Spannungs-Messsensors 1020 wird also die physikalische Größe Spannung über dem Schalter S1_1 gemessen. Wenn der Schalter S1_1 geschlossen ist, dann weist der Schalter S1_1 einen sehr geringen ohmschen Widerstand auf, daher tritt über dem Schalter S1_1 nur eine sehr geringe Spannung auf, welche von dem Spannungs-Messsensor 1020 gemessen wird (im Idealfall die Spannung Null). Wenn jedoch der Schalter S1_1 geöffnet ist, dann hat der Schalter einen sehr großen ohmschen Widerstand und der Spannungs-Messsensor 1020 misst im Wesentlichen die an dem Modul 1_1 auftretende Spannung.

Im Folgenden wird ein Verfahren zum Überwachen des modularen Multilevel-Stromrichters am Beispiel der Anordnung 601 der Figur 6 erläutert. Mittels des ersten Strom-Messsensors 615 wird der durch den Schalter fließende Strom 620 (Schalter-Strom 620) unter Bildung eines Schalter-Strom-Messwerts M620 gemessen. Weiterhin ist ein aktueller Messwert M622 des gesamten durch den Phasenmodulzweig 11 des Stromrichters fließenden Stroms 622 (Phasenmodulzweig-Strom 622) bekannt. Dieser aktuelle Phasenmodulzweig-Strom-Messwert M622 liegt im Beispiel bei der (nicht dargestellten) Steuereinrichtung des Stromrichters 1 vor. Der aktuelle Phasenmodulzweig-Strom-Messwert M622 dient als Vergleichswert.

Nun wird in der Steuereinrichtung das Verhältnis gebildet zwischen dem Schalter-Strom-Messwert M620 und dem Phasenmodulzweig-Strom-Messwert M622. Wenn dieses Verhältnis einen vorbestimmten Schwellwert überschreitet (beispielsweise den Schwellwert 10), dann wird der geschlossene Schaltzustand des Schalters S1_1 erkannt. Es fließt dann nämlich der größte Teil des Stroms durch den Schalter S1_1; daraus ergibt sich, dass der geschlossene Schaltzustand des Schalters S1_1 vorliegt. Wenn dieses Verhältnis jedoch den vorbestimmten Schwellwert unterschreitet, dann wird der geöffnete Schaltzustand des Schalters erkannt (weil dann ein beträchtlicher Teil des Stroms nicht durch den Schalter S1_1, sondern durch das Modul 1_1 fließt). So kann durch Auswertung des Schalter-Strom-Messwerts erkannt werden, ob der Schalter in seinem geöffneten Schaltzustand oder in seinem geschlossenen Schaltzustand ist.

Wenn der Phasenmodulzweig-Strom-Messwert M622 nicht bekannt ist, dann kann als Vergleichswert der Modul-Strom-Messwert M625 verwendet werden. Dieses Verfahren wird anhand der Anordnung der Figur 7 erläutert. Als Vergleichswert wird hier mittels des zweiten Strom-Messsensors 718 der durch das Modul 1_1 fließende Strom 625 (Modul-Strom 625) unter Bildung eines Modul-Strom-Messwerts M625 gemessen. Daraufhin wird das Verhältnis aus dem Schalter-Strom-Messwert M620 und dem Modul-Strom-Messwert M625 gebildet. Wenn dieses Verhältnis größer ist als der vorbestimmte Schwellwert, dann wird der geschlossene Schaltzustand des Schalters S1_1 erkannt; wenn das Verhältnis kleiner ist als der vorbestimmte Schwellwert, dann wird der geöffnete Schaltzustand des Schalters S1_1 erkannt.

In gleichartiger Weise läuft das Verfahren bei den Anordnungen nach den Figuren 8 und 9 ab mit dem einzigen Unterschied, dass anstelle der Strom-Messwerte die entsprechenden Magnetfeld-Messewerte des ersten Magnetfeld-Messsensors 815 und/oder des zweiten Magnetfeld-Messsensors 918 verwendet werden.

Das bei der Anordnung 1001 nach Figur 10 ablaufende Verfahren kommt ohne einen Vergleichswert aus. Hierbei wird lediglich die über dem Schalter S1_1 auftretende Spannung Us unter Bildung eines Schalter-Spannungs-Messwerts MUs gemessen. Wenn dieser Schalter-Spannungs-Messwert MUs einen vorbestimmten Minimum-Schalter-Spannungswert unterschreitet, dann wird der geschlossene Schaltzustand erkannt; wenn der Schalter-Spannungs-Messwert MUs den Minimum-Schalter-Spannungswert überschreitet, dann wird der geöffnete Schaltzustand des Schalters S1_1 erkannt. Der Minimum-Schalter-Spannungswert kann beispielsweise bei 100 V liegen.

Eine weitere Variante sieht vor, dass mittels eines der vorstehend erläuterten Verfahren bei geschlossenem Schaltzustand des Schalters (also bei defektem, durch den Schalter überbrücktem Modul) die physikalische Größe (Spannung, Strom oder Magnetfeld) wiederholt in zeitlichen Abständen unter Bildung jeweils eines Messwerts gemessen wird. Anhand des jeweiligen Messwerts kann dann wiederholt ermittelt werden, ob der Schalter (immer noch) in seinem geschlossenen Schaltzustand ist oder ob der Schalter in seinem geöffneten Schaltzustand ist. Das Vorliegen eines geöffneten Schaltzustands würde auf einen Fehler hinweisen, weil ein einmal geschlossener Schalter nicht wieder geöffnet werden soll, bis das defekte Modul durch ein funktionsfähiges Modul ersetzt wird.

Für alle beschriebenen Verfahren gibt es folgende Option:
Wenn bei einem defekten Modul der Schalter in seinem geöffneten Schaltzustand ist, dann wird ein Schalter-Geöffnet-Signal ausgegeben. Ein derartiges Schalter-Geöffnet-Signal kann beispielsweise ein Warnsignal sein oder ein derartiges Schalter-Geöffnet-Signal kann als eine zusätzliche Eingangsgröße zu einer Steuerungseinheit des Stromrichters geleitet werden, die daraufhin den Ausgangsstrom des Stromrichters reduziert. Dadurch werden Überhitzungsschäden aufgrund des (unerwünschten) Stromflusses durch das defekte Modul, nachfolgende Brände o.ä. vermieden.

Eine weitere Variante des Verfahrens sieht vor, dass bei geschlossenem Schaltzustand des Schalters wiederholt Messwerte der physikalischen Größe gemessen werden (Schalter-Strom-Messwerte oder Schalter-Spannungs-Messwerte). Diese in zeitlichem Abstand gemessenen Schalter-Strom-Messwerte oder Schalter-Spannungs-Messwerte stellen einen zeitlichen Messwerteverlauf dar. Dieser zeitliche Messwerteverlauf wird dann daraufhin ausgewertet, ob der ohmsche Übergangswiderstand des Schalters zunimmt. Eine solche Vergrößerung des ohmschen Übergangswiderstands des Schalters kann beispielsweise aufgrund von Alterungsprozessen (Materialermüdung, Oxidation der Kontakte usw.) auftreten. Beispielsweise wird erkannt, dass der ohmsche Übergangswiderstand des Schalters zunimmt, wenn das Verhältnis zwischen den Schalter-Strom-Messwerten M620 und den zugehörigen Phasenmodulzweig-Strom-Messwerten M622 größer wird oder wenn die Schalter-Spannungs-Messwerte MUs größer werden. Auf diese Weise kann die Langzeitqualität (bzw. das Alterungsverhalten) des elektrischen Kontakts des geschlossenen Schalters überwacht werden. Wenn sich herausstellt, dass die Kontaktqualität schlechter wird (weil der ohmsche Widerstand größer wird), dann kann der Schalter erneuert werden, oder das defekte Modul kann gegen ein neues funktionierendes Modul getauscht werden.

In Figur 11 ist in einem Ablaufdiagramm ein beispielhafter Verfahrensablauf mit einem Strom-Messwert zusammengefasst dargestellt.

Verfahrensschritt 1102:
Messen, mittels des elektrischen Messsensors, des durch den Schalter fließenden Stroms unter Bildung eines Schalter-Strom-Messwerts.

Verfahrensschritt 1104:
Vergleichen des Schalter-Strom-Messwerts M620 mit einem Vergleichswert, wobei der Vergleichswert der durch den Phasenmodulzweig fließende Strom (Phasenmodulzweig-Strom-Messwert M622) oder der durch das Modul fließende Strom (Modul-Strom-Messwert M625) ist.

Verfahrensschritt 1106:
Erkennen des geschlossenen Schaltzustands, wenn das Verhältnis einen vorbestimmten Schwellwert überschreitet.

Verfahrensschritt 1108:
Erkennen des geöffneten Schaltzustands, wenn das Verhältnis den vorbestimmten Schwellwert unterschreitet.

Verfahrensschritt 1110 (optional):
Ausgeben eines Alarmsignals, wenn der geöffnete Schaltzustand erkannt worden ist, obwohl der Schalter den geschlossenen Schaltzustand aufweisen müsste.

In Figur 12 ist in einem Ablaufdiagramm ein beispielhafter Verfahrensablauf mit einem Spannungs-Messwert zusammengefasst dargestellt.

Verfahrensschritt 1202:
Messen, mittels des elektrischen Messsensors, der an dem Schalter auftretenden Spannung unter Bildung eins Schalter-Spannungs-Messwert MUs.

Verfahrensschritt 1204:
Erkennen des geschlossenen Schaltzustands, wenn der Schalter-Spannungs-Messwert MUs einen vorbestimmten Schwellwert unterschreitet.

Verfahrensschritt 1206:
Erkennen des geöffneten Schaltzustands, wenn der Schalter-Spannungs-Messwert MUs den vorbestimmten Schwellwert überschreitet.

Verfahrensschritt 1208 (optional):
Ausgeben eines Alarmsignals, wenn der geöffnete Schaltzustand erkannt worden ist, obwohl der Schalter den geschlossenen Schaltzustand aufweisen müsste.

Es wurde eine Anordnung und ein Verfahren beschrieben, mit denen mittels einer Messung einer physikalischen Größe die Funktion des Schalters und die Kontakteigenschaften des Schalters überwacht werden können. Damit wird die Funktionssicherheit der Überbrückung von defekten Modulen überwacht und nicht korrekt funktionierende Schalter erkannt. Damit wird die Funktionsfähigkeit des Multilevel-Stromrichters (und damit die Funktionsfähigkeit der mittels des Multilevel-Stromrichters stattfindenden Energieübertragung) erheblich verbessert.

## Patentansprüche

1. Modularer Multilevelstromrichter (1) mit mindestens einer Anordnung (601), die ein Modul (1_1) des modularen Multilevelstromrichters (1) umfasst, wobei das Modul mindestens zwei elektronische Schaltelemente (202, 206) und einen elektrischen Energiespeicher (210) aufweist, und wobei die Anordnung (601) einen Schalter (S1_1), der in seinem geschlossenen Schaltzustand das Modul (1_1) elektrisch überbrückt, aufweist, wobei
- die zwei elektronischen Schaltelemente (202, 206) des Moduls in einer Halbbrückenschaltung angeordnet sind, oder
- das Modul (301) die zwei elektronischen Schaltelemente (202, 206) und zwei weitere elektronische Schaltelemente (302, 306) aufweist, wobei die zwei elektronischen Schaltelemente (202, 206) und die zwei weiteren elektronischen Schaltelemente (302, 306) in einer Vollbrückenschaltung angeordnet sind, wobei das Modul eine modulinterne Schalter-Ansteuereinrichtung aufweist, wobei diese eingerichtet ist, bei Auftreten eines Defekts an dem Modul (1_1) den Schalter (Sl_l) zu schließen, wobei
die Anordnung einen Messsensor (615) aufweist zur Messung einer physikalischen Größe (620), die an dem Schalter (S1_1) auftritt und die verschiedene Werte annimmt in Abhängigkeit davon, ob der Schalter (S1_1) in seinem geöffneten Schaltzustand oder in seinem geschlossenen Schaltzustand ist,
und wobei der modulare Multilevelstromrichter (1) eine Steuerungseinheit aufweist,
**dadurch gekennzeichnet, dass**
- die physikalische Größe eine elektrische Spannung (Us) ist, und der Messsensor ein Spannungs-Messsensor (1020) ist, der parallel zu dem Schalter (S1_1) geschaltet ist, und die Anordnung so ausgestaltet ist, dass
- als physikalische Größe die über dem Schalter (S1_1) auftretende Spannung (Us) unter Bildung eines Schalter-Spannungs-Messwerts (MUs) gemessen wird, und der geschlossene Schaltzustand erkannt wird, wenn der Schalter-Spannungs-Messwert (MUs) einen Minimum-Schalter-Spannungswert unterschreitet, und der geöffnete Schaltzustand erkannt wird, wenn der Schalter-Spannungs-Messwert den Minimum-Schalter-Spannungswert überschreitet,
- von der Steuerungseinheit des Multilevelstromrichters ein Ausgangsstrom des Multilevelstromrichters reduziert wird, wenn bei einem defekten Modul der jeweilige Schalter in seinem geöffneten Schaltzustand ist, und
- bei geschlossenem Schaltzustand des Schalters (S1_1) wiederholt in zeitlichen Abständen Schalter-Spannungs-Messwerte (MUs) ermittelt werden, und diese Schalter-Spannungs-Messwerte (MUs) daraufhin ausgewertet werden, ob der ohmsche Übergangswiderstand des Schalters (S1_1) zunimmt.

2. Modularer Multilevelstromrichter (1)
nach Anspruch 1,
**dadurch gekennzeichnet, dass**
- der Schalter ein mechanischer Schalter (S1_1) ist.

3. Hochspannungs-Gleichstrom-Übertragungsanlage (401) mit einem modularen Multilevelstromrichter (1) nach Anspruch 1 oder 2.

4. Verfahren zum Überwachen eines modularen Multilevelstromrichters (1), der mindestens einen Phasenmodulzweig (11) mit einer Mehrzahl von Modulen (1_1, 1_2, 1_3, 1_4) aufweist, die jeweils mindestens zwei elektronische Schaltelemente (202, 206) und einen elektrischen Energiespeicher (210) aufweisen, wobei
- die zwei elektronischen Schaltelemente (202, 206) des Moduls (201) in einer Halbbrückenschaltung angeordnet sind, oder das Modul (301) die zwei elektronischen Schaltelemente (202, 206) und zwei weitere elektronische Schaltelemente (302, 306) aufweist, wobei die zwei elektronischen Schaltelemente (202, 206) und die zwei weiteren elektronischen Schaltelemente (302, 306) in einer Vollbrückenschaltung angeordnet sind, und
- die Module mit jeweils einem elektrischen Schalter (S1_1, S1_2, S1_3, S1_4) versehen sind, der in seinem geschlossenen Schaltzustand das jeweilige Modul elektrisch überbrückt, wobei bei dem Verfahren
- mittels eines Messsensors (615) eine physikalische Größe (620) unter Bildung eines Messwerts (M620) der physikalischen Größe gemessen wird, wobei die physikalische Größe (620) an dem Schalter (S1_1) auftritt und verschiedene Werte annimmt in Abhängigkeit davon, ob der Schalter (S1_1) in seinem geöffneten Schaltzustand oder in seinem geschlossenen Schaltzustand ist, und
- anhand des Messwerts (M620) ermittelt wird, ob der Schalter (S1_1) in seinem geöffneten Schaltzustand oder in seinem geschlossenen Schaltzustand ist, wobei die Module eine modulinterne Schalter-Ansteuereinrichtung aufweisen, wobei diese eingerichtet ist, bei Auftreten eines Defekts an dem jeweiligen Modul (1._.1 ) den Schalter (S1_1) zu schließen,
**dadurch gekennzeichnet , dass**
- als physikalische Größe die über dem Schalter (S1_1) auftretende Spannung (Us) unter Bildung eines Schalter-Spannungs-Messwerts (MUs) gemessen wird, der geschlossene Schaltzustand erkannt wird, wenn der Schalter-Spannungs-Messwert (MUs) einen Minimum-Schalter-Spannungswert unterschreitet, und der geöffnete Schaltzustand erkannt wird, wenn der Schalter-Spannungs-Messwert den Minimum-Schalter-Spannungswert überschreitet,
- von einer Steuerungseinheit des Multilevelstromrichters ein Ausgangsstrom des Multilevelstromrichters reduziert wird, wenn bei einem defekten Modul der jeweilige Schalter in seinem geöffneten Schaltzustand ist, und
- bei ermitteltem geschlossenen Schaltzustand des Schalters (S1_1) wiederholt in zeitlichen Abständen Schalter-Spannungs-Messwerte (MUs) ermittelt werden, und diese Schalter-Spannungs-Messwerte (MUs) daraufhin ausgewertet werden, ob der ohmsche Übergangswiderstand des Schalters (S1_1) zunimmt.

5. Verfahren nach Anspruch 4,
**dadurch gekennzeichnet, dass**
- bei ermitteltem geschlossenen Schaltzustand des Schalters (S1_1) die physikalische Größe (620) wiederholt in zeitlichen Abständen unter Bildung jeweils eines Messwertes (M620) gemessen wird, und
- für die Messwerte (M620) jeweils ermittelt wird, ob der Schalter (S1_1) in seinem geöffneten Schaltzustand oder in seinem geschlossenen Schaltzustand ist.

6. Verfahren nach Anspruch 4 oder 5,
**dadurch gekennzeichnet, dass**
- erkannt wird, dass der ohmsche Übergangswiderstand des Schalters (S1_1) zunimmt, wenn die Schalter-Spannungs-Messwerte (MUs) größer werden.

## Claims

1. Modular multilevel converter (1) having at least one arrangement (601) comprising a module (1_1) of the modular multilevel converter (1), wherein the module comprises at least two electronic switching elements (202, 206) and an electrical energy storage device (210), and wherein the arrangement (601) comprises a switch (S1_1) which in its closed switching state electrically bypasses the module (1_1), wherein
- the two electronic switching elements (202, 206) of the module are arranged in a half-bridge circuit, or
- the module (301) comprises the two electronic switching elements (202, 206) and two additional electronic switching elements (302, 306), wherein the two electronic switching elements (202, 206) and the two additional electronic switching elements (302, 306) are arranged in a full-bridge circuit, wherein the module comprises a switch actuation device inside the module, wherein said switch actuation device is configured to close the switch (S1_1) in the event of a fault in the module (1_1), wherein
the arrangement comprises a measuring sensor (615) for measuring a physical variable (620) which arises at the switch (S1_1) and which assumes different values depending on whether the switch (S1_1) is in its open switching state or in its closed switching state,
and wherein the modular multilevel converter (1) comprises a control unit,
**characterized in that**
- the physical variable is an electrical voltage (Us), and the measuring sensor is a voltage measuring sensor (1020) connected in parallel with the switch (S1_1), and the arrangement is designed so that
- the physical variable measured is the voltage (Us) arising across the switch (S1_1) forming a switch voltage measurement value (MUs), and the closed switching state is identified when the switch voltage measurement value (MUs) falls below a minimum switch voltage value, and the open switching state is identified when the switch voltage measurement value exceeds the minimum switch voltage value,
- the control unit of the multilevel converter reduces an output current of the multilevel converter if, in the case of a faulty module, the respective switch is in its open switching state, and
- if the switch (S1_1) is in its closed switching state, switch voltage measurement values (MUs) are repeatedly determined at intervals, and these switch voltage measurement values (MUs) are evaluated to determine whether the ohmic contact resistance of the switch (S1_1) increases.

2. Modular multilevel converter (1) according to Claim 1, **characterized in that**
- the switch is a mechanical switch (S1_1).

3. High-voltage DC transmission system (401) having a modular multilevel converter (1) according to Claim 1 or 2.

4. Method for monitoring a modular multilevel converter (1) having at least one phase module branch (11) having a plurality of modules (1_1, 1_2, 1_3, 1_4 each having at least two electronic switching elements (202, 206) and an electrical energy storage device (210), wherein
- the two electronic switching elements (202, 206) of the module (201) are arranged in a half-bridge circuit, or the module (301) comprises the two electronic switching elements (202, 206) and two additional electronic switching elements (302, 306), wherein the two electronic switching elements (202, 206) and the two additional electronic switching elements (302, 306) are arranged in a full-bridge circuit, and
- the modules are each provided with an electrical switch (S1_1, S1_2, S1_3, S1_4) which in its closed switching state electrically bypasses the respective module, wherein, in the method,
- a measuring sensor (615) is used to measured a physical variable (620) by forming a measurement value (M620) of the physical variable, wherein the physical variable (620) arises at the switch (S1_1) and assumes different values depending on whether the switch (S1_1) is in its open switching state or in its closed switching state, and
- the measurement value (M620) is used to determine whether the switch (S1_1) is in its open switching state or in its closed switching state, wherein the modules comprise a switch actuation device inside the module, said switch actuation device being configured to close the switch (S1_1) in the event of a fault in the respective module (1._.1),
**characterized in that**
- the physical variable measured is the voltage (Us) arising over the switch (S1_1) forming a switch voltage measurement value (MUs), the closed switching state is identified when the switch voltage measurement value (MUs) falls below a minimum switch voltage value, and the open switching state is identified when the switch voltage measurement value exceeds the minimum switch voltage value,
- a control unit of the multilevel converter reduces an output current of the multilevel converter if, in the case of a faulty module, the respective switch is in its open switching state, and
- if the switch (S1_1) is determined to be in its closed switching state, switch voltage measurement values (MUs) are repeatedly determined at intervals, and these switch voltage measurement values (MUs) are evaluated to determine whether the ohmic contact resistance of the switch (S1_1) increases.

5. Method according to Claim 4,
**characterized in that**
- if the switch (S1_1) is determined to be in its closed switching state, the physical variable (620) is measured repeatedly at intervals, each time forming a measurement value (M620), and
- it is determined for each of the measurement values (M620) whether the switch (S1_1) is in its open switching state or in its closed switching state.

6. Method according to Claim 4 or 5,
**characterized in that**
- it is identified that the ohmic contact resistance of the switch (S1_1) increases as the switch voltage measurement values (MUs) increase.

## Revendications

1. Convertisseur (1) modulaire à plusieurs niveaux comprenant au moins un agencement (601), qui comprend un module (1_1) du convertisseur (1) modulaire à plusieurs niveaux, dans lequel le module a au moins deux éléments (202, 206) électroniques de coupure et un accumulateur (210) d'énergie électronique, et dans lequel l'agencement (601) a un interrupteur (S1_1), qui, dans son état fermé, shunte électriquement le module (1_1), dans lequel
- les deux éléments (202, 206) électroniques de coupure du module sont montés en un montage en demi-pont, ou
- le module (301) a les deux éléments (202, 206) électroniques de coupure et deux autres éléments (302, 306) électroniques de coupure, dans lequel les deux éléments (202, 206) électroniques de coupure et les deux autres éléments (302, 306) électroniques de coupure sont montés en un montage en pont complet, dans lequel le module a un dispositif de commande d'interrupteur interne au module, dans lequel ce dispositif est agencé pour, s'il se produit un défaut sur le module (1_1), fermer l'interrupteur (S1_1), dans lequel
l'agencement a un capteur (615) de mesure pour la mesure d'une grandeur (620) physique, qui se produit sur l'interrupteur (S1_1) et qui prend des valeurs différentes en fonction du point de savoir, si l'interrupteur (S1_1) est dans son état ouvert ou est dans son état fermé,
et dans lequel le convertisseur (1) modulaire à plusieurs niveaux a une unité de commande,
**caractérisé en ce que**
- la grandeur physique est une tension (Us) électrique, et le capteur de mesure est un capteur (1020) de mesure de la tension, qui est monté en parallèle avec l'interrupteur (S1_1) et l'agencement est conformé, de manière
- à mesurer comme grandeur physique la tension (Us) apparaissant aux bornes de l'interrupteur (S1_1) avec formation d'une valeur (MUs) de mesure de tension de l'interrupteur et à identifier l'état fermé, si la valeur (MUs) de mesure de la tension de l'interrupteur devient inférieure à une valeur de tension de l'interrupteur minimum, et à identifier l'état ouvert si la valeur de mesure de la tension de l'interrupteur dépasse la valeur de tension de l'interrupteur minimum,
- un courant de sortie du convertisseur à plusieurs niveaux est réduit par l'unité de commande du convertisseur à plusieurs niveaux, si, pour un module défectueux, l'interrupteur respectif est dans son état ouvert, et
- lorsque l'interrupteur (S1_1) est dans l'état fermé, on détermine, de manière répétée à des intervalles dans le temps, des valeurs (MUs) de mesure de la tension d'interrupteur et on évalue ces valeurs (MUs) de mesure de la tension d'interrupteur sur le point de savoir si la résistance ohmique aux contacts de l'interrupteur (S1_1) augmente.

2. Convertisseur (1) modulaire à plusieurs niveaux suivant la revendication 1,
**caractérisé en ce que**
- l'interrupteur est un interrupteur (S1_1) mécanique.

3. Installation (401) de transport de courant continu à haute tension, comprenant un convertisseur (1) modulaire à plusieurs niveaux suivant la revendication 1 ou 2.

4. Procédé de contrôle d'un convertisseur (1) modulaire à plusieurs niveaux, qui a au moins une branche (11) de module de phase ayant une pluralité de modules (1_1, 1_2, 1_3, 1_4), qui ont chacun au moins deux éléments (202, 206) électroniques de coupure et un accumulateur (210) d'énergie électrique, dans lequel
- les deux éléments (202, 206) électroniques de coupure du module (201) sont montés en un montage en demi-pont,
ou le module (301) a deux éléments (202, 206) électroniques de coupure et deux autres éléments (302, 306) électroniques de coupure, dans lequel les deux éléments (202, 206) électroniques de coupure et les deux autres éléments (302, 306) électroniques de coupure sont montés en un montage en pont complet, et
- les modules sont pourvus chacun d'un interrupteur (S1_1, S1_2, S1_3, S1_4) électrique, qui dans son état fermé, shunte électriquement le module respectif, dans lequel dans le procédé
- au moyen d'un capteur (615) de mesure, on mesure une grandeur (620) physique avec formation d'une valeur (M620) de mesure de la grandeur physique, dans lequel la grandeur (620) physique se produit sur l'interrupteur (S1_1) et prend des valeurs différentes en fonction du point de savoir, si l'interrupteur (S1_1) est dans son état ouvert ou dans son état fermé, et
- à l'aide de la valeur (M620) de mesure, on détermine si l'interrupteur (S1_1) est dans son état ouvert ou dans son état fermé, dans lequel les modules ont un dispositif de commande d'interrupteur interne au module, dans lequel celui-ci est agencé pour, à l'apparition d'un défaut sur le module (1._.1) respectif, fermer l'interrupteur (S1_1),
**caractérisé en ce que**
- comme grandeur physique, on mesure la tension (Us) apparaissant aux bornes de l'interrupteur (S1_1) avec formation d'une valeur (MUs) de mesure de tension de l'interrupteur, on identifie l'état fermé si la valeur (MUs) de mesure de tension de l'interrupteur est inférieure à une valeur de tension d'interrupteur minimum et on identifie l'état ouvert, si la valeur de mesure de tension d'interrupteur dépasse la valeur de tension d'interrupteur minimum,
- par une unité de commande du convertisseur à plusieurs niveaux, on réduit le courant de sortie du convertisseur à plusieurs niveaux, si, pour un module défectueux, l'interrupteur respectif est dans son état ouvert, et
- lorsque l'interrupteur (S1_1) est dans l'état fermé, on détermine de manière répétée à des intervalles dans le temps, des valeurs (MUs) de mesure de la tension d'interrupteur et on évalue ces valeurs (MUs) de mesure de la tension d'interrupteur sur le point de savoir, si la résistance ohmique aux contacts de l'interrupteur (S1_1) augmente.

5. Procédé suivant la revendication 4,
**caractérisé en ce que**
- lorsque l'état fermé de l'interrupteur (S1_1) est déterminé, on mesure de manière répétée la grandeur (620) physique à des intervalles de temps avec formation respectivement d'une valeur (M620) de mesure, et
- on détermine pour les valeurs (M620) de mesure respectivement, si l'interrupteur (S1_1) est dans son état ouvert ou dans son état fermé.

6. Procédé suivant la revendication 4 ou 5,
**caractérisé en ce que**
- l'on identifie que la résistance ohmique aux bornes de l'interrupteur (S1_1) augmente, si les valeurs (MUs) de mesure de tension d'interrupteur deviennent plus grandes.
